# EUROPEAN PATENT SPECIFICATION

(11) **EP 2 593 618 B1**
(45) Date of publication and mention of the grant of the patent: **05.04.2017**
(21) Application number: 11749001.1
(22) Date of filing: 15.07.2011
(51) Int. Cl.: E04H 3/22, G03B 21/00

(54) **A CINEMA STRUCTURE AND A METHOD FOR FACILITATING PROJECTING AND VIEWING A MOTION PICTURE**
EINE KINOSTRUKTUR UND EIN VERFAHREN ZUR ERLEICHTERUNG DER PROJEKTION UND DES ANSCHAUENS EINES FILMES
STRUCTURE DE SALLE DE CINÉMA ET PROCÉDÉ POUR FACILITER LA PROJECTION ET LE VISIONNEMENT D'UN FILM CINÉMATOGRAPHIQUE

(30) Priority: 15.07.2010 IE 20100438
(43) Date of publication of application: 22.05.2013
(73) Proprietor: Image Limited, Isle of man IM1 5PD (IE)
(72) Inventor: ANDERSON, Thomas, Dublin 14 (IE)
(74) Representative: Gorman, Francis Fergus
(86) International application number: PCT/IE2011/000037
(87) International publication number: WO 2012/007930

(56) References cited:
- WO-A1-98/38404
- WO-A2-99/56173
- US-A- 5 469 669
- US-A1- 2003 131 537
- LYLE S: "THE CINEMA ARCHITECTURE OF FLETCHER PRIEST", IMAGE TECHNOLOGY, BKSTS, LONDON, GB, vol. 73, no. 10, 1 October 1991 (1991-10-01), pages 81-86, XP000227315, ISSN: 0950-2114
- Mark Wilson: "Cineplexes Getting IMAX, But Is It IMAX or CONSPIRACY?", Gizmodo.com , 12 May 2009 (2009-05-12), XP002678428, Retrieved from the Internet: URL:http://web.archive.org/web/20090515095 149/http://gizmodo.com/5250625/cineplexes- getting-imax-but-is-it-imax-or-conspiracy [retrieved on 2012-06-25]

## Description

The present invention relates to a cinema structure, and the invention also relates to a method for facilitating projecting and viewing a motion picture.

Cinemas and cinema structures comprising an auditorium within which motion pictures are projected by a projector onto a screen for viewing by patrons in the auditorium are well known. In general, a screen is located adjacent the front of the auditorium, and images of the motion picture are projected from a projector adjacent the rear of the auditorium onto the screen. Seating in the auditorium typically is tiered, and inclined in a generally upwardly direction from the screen. However, in general, patrons sitting in seats in the auditorium of cinemas known heretofore when viewing images of the motion picture on a screen do not obtain a particularly intimate experience, in that in general they do not feel part of the action of the motion picture. This is largely due to the construction of such cinemas.

WO-A-99/56173 discloses a cinema structure and a method for facilitating and viewing a motion picture in accordance with the respective preambles of claims 1 and 15.

There is therefore a need for a cinema structure which provides patrons in the auditorium with a more intimate experience than that which in general is provided by cinemas and cinema structures known heretofore. There is also a need for a method of projecting and viewing a motion picture which likewise provides patrons in an auditorium of a cinema structure with a more intimate experience than can be obtained in general in cinemas and cinema structures known heretofore.

The present invention is directed towards providing such a cinema structure and a method.

According to the invention there is provided a cinema structure according to claim 1, said cinema structure comprising, inter alia, a front end wall and a rear end wall spaced apart from the front end wall and defining with the front end wall an auditorium, a screen being located adjacent the front end wall, the screen extending from a lower edge to a spaced apart upper edge and from one of a pair of spaced apart side edges to the other side edge, an image projecting means located spaced apart from the screen adapted for projecting a motion picture onto the screen, and tiered seating located in the auditorium, the tiered seating defining tiering angle of the seating in the range of 20° to 40° rising in a general direction from the front end wall to the rear end wall.

In one embodiment of the invention the tiering angle of the seating lies in the range of 22° to 30°. Preferably, the tiering angle of the seating is approximately 25°.

The seating comprises a plurality of seats configured in rows. Preferably, the rows of seats extend substantially transversely of the tiering. The seats may be spaced apart at a horizontal pitch in the range of 1,000mm to 1,500mm. Preferably, the rows of the seats are spaced apart at a horizontal pitch of approximately 1,300mm.

Preferably, the rows of the seats are arcuately configured when viewed in plan. Advantageously, the rows of the seats when viewed from the screen are configured to be concave.

A centre one of the seats in a row of the seats immediately behind a front row of the seats may be spaced apart a perpendicular distance from the screen in the range of 4 metres to 8.5 metres. Preferably, the centre one of the seats in the row of the seats immediately behind the front row of the seats is spaced apart a perpendicular distance from the screen of approximately 7.3 metres.

In another embodiment of the invention a centre one of the seats in a back row of the seats is spaced apart from the screen a perpendicular distance in the range of 12 metres to 30 metres. Preferably, the centre one of the seats of the back row of the seats is spaced apart a perpendicular distance from the screen of approximately 14 metres.

The front row of seats comprises a left-hand part and a right-hand part spaced apart from each other and defining a central gap therebetween which preferably is free of seats. Preferably, the central gap defined between the left-hand and right-hand parts of the front row is of length corresponding to the space which would be occupied by a number of the seats arranged side by side, the said number of seats lying in the range of three seats to nine seats. Advantageously, the said number of seats is approximately seven seats.

Preferably, the number of seats in the left-hand part of the front row of seats is similar to the number of seats in the right-hand part thereof. Advantageously, the number of seats in each of the left-hand and right-hand parts of the front row lies in the range of five seats to twenty seats. Ideally, the number of seats in each of the left and right-hand parts of the front row is nine seats.

Preferably, the left and right parts of the front row are equi-spaced on opposite sides of a vertical plane bisecting the screen between the respective side edges thereof and extending perpendicularly from the screen. The rows of the seats are supported on respective plinths. Preferably, the vertical rise between adjacent plinths lies in the range of 400mm to 800mm. Advantageously, the vertical rise between adjacent plinths is approximately 600mm. The plinth on which the front row of the seats is supported may be at a vertical level above the lower edge of the screen in the range of 1,000mm to 1,400m. Preferably, the plinth on which the front row of the seats is supported is at a vertical level above the lower edge of the screen of approximately 1,200mm. The plinth on which the front row of seats is supported comprises a left-hand part and a right-hand part spaced apart from each other, and defining a central gap therebetween, the seats of the left and right-hand parts of the front row being supported on the left and right-hand parts, respectfully, of the front plinth. Preferably, the length of the central gap defined by the left and right-hand parts of the front plinth is substantially similar to the length of the central gap defined by the left and right-hand parts of the front row of seats. Advantageously, the left and right-hand parts of the plinth are equi-spaced on opposite sides of the vertical plane bisecting the screen between the respective side edges thereof and extending perpendicularly from the screen. A first lower row of seats may be located in front of the front row of seats, the said first lower row of seats being supported at a level substantially similar to the level of the lower edge of the screen. Preferably, the first lower row of seats comprises a left-hand part and a right-hand part, the left and right-hand parts thereof being equi-spaced on opposite sides of the vertical plane bisecting the screen between the respective side edges thereof and extending perpendicularly from the screen. A second lower row of one or both of seats and wheelchair spaces may be located in the central gap defined by the front plinth at a level substantially similar to the level of the lower edge of the screen. A first upper row of seats may be located behind the back row of seats. Preferably, the first upper row of seats comprises a left-hand part and a right-hand part equi-spaced on opposite sides of the vertical plane bisecting the screen between the respective side edges thereof and extending perpendicularly from the screen. Advantageously, the left and right-hand parts of the first upper row of seats are located on opposite sides of a projection room.

Advantageously, the first upper row of seats is supported on a rear plinth, and the vertical rise between the rear plinth supporting the first upper row of seats and the plinth supporting the back row of seats lies in the range of 400mm to 800mm.

Preferably, the vertical rise between the rear plinth supporting the first upper row of seats and the plinth supporting the back row of seats is approximately 600mm.

Preferably, the horizontal pitch between the back row of seats and the first upper row of seats lies in the range of 1,000mm to 1,500mm. Advantageously, the horizontal pitch between the back row of seats and the first upper row of seats is approximately 1,300mm. The aspect ratio of the screen may be in the range of 1.85:1 to 2.35:1. Preferably, the aspect ratio of the screen is approximately 1.95:1.

The screen may be of overall width from one side edge to the other in the range of 10 metres to 24 metres. Preferably, the screen is of overall width from one side edge to the other of approximately 16 metres.

Advantageously, the height of the screen from the lower edge to the upper edge thereof lies in the range of 5 metres to 12 metres. Preferably, the height of the screen from the lower edge to the upper edge thereof is approximately 8 metres. The screen may extend substantially from the floor of the auditorium to the ceiling thereof. Advantageously, the screen extends from one side wall of the cinema structure to another side wall thereof, the side walls of the cinema structure being spaced apart from each other and extending from the front end wall to the rear end wall to define with the front and rear end walls the auditorium.

Preferably, the screen comprises a flat screen. Advantageously, the screen comprises a planar screen. The image projecting means may comprise a projection lens, and the image projecting means is located so that a central axis of the projection lens is located at a vertical height above a horizontal plane which bisects the screen between the lower edge and the upper edge thereof and extends perpendicularly therefrom, the vertical height of the central axis of the projection lens above the horizontal bisecting plane being in the range of one-eighth and one-third of the height of the screen from the lower edge to the upper edge thereof.

Preferably, the vertical height of the central axis of the projection lens above the horizontal bisecting plane is approximately one-quarter of the height of the screen from the lower edge to the upper edge thereof.

Preferably, the central axis of the projection lens of the image projecting means lies in the vertical plane bisecting the screen between the side edges thereof and extending perpendicularly from the screen. The projection lens of the image projecting means may be spaced apart from the screen a perpendicular distance of up to 30 metres. Preferably, the projection lens of the image projecting means is spaced apart from the screen a perpendicular distance of up to 26 metres. Advantageously, the projection lens of the image projecting means is spaced apart from the screen a perpendicular distance in the order of 13 metres to 16 metres.

In a further embodiment of the invention the projection lens of the image projecting means comprises a Fresnel lens having a focal length in the range of 0.7 to 13.

Preferably, the image projecting means comprises a video projector.

The invention also provides a method for facilitating projecting and viewing a motion according to claim 15, the method comprising, inter alia, providing a cinema structure comprising a front end wall and a rear end wall spaced apart from the front end wall and defining with the front end wall an auditorium, locating a screen adjacent the front end wall, locating an image projecting means spaced apart from the screen adapted to project a motion picture onto the screen, providing tiered seating in the auditorium at a tiering angle in the range of 20° to 40° rising in a general direction from the front end wall to the rear end wall, and projecting images of the motion picture from the image projecting means onto the screen.

The advantages of the invention are many. A particularly important advantage of the invention is that patrons in the auditorium of the cinema structure according to the invention are provided with quite an intimate experience, in that the patrons seated in the auditorium virtually become a part of the action of the motion picture, to the extent that such patrons are provided with an experience of participating in the action of the motion picture. It has been found that this intimate experience which is provided to patrons seated in the auditorium is highly impressive, and furthermore, by virtue of the tiering of the seating and the location of the seating relative to the screen, as well as being provided with an intimate experience, patrons seated in the auditorium are provided with a clear and uninterrupted view of the entire screen. Additionally, the provision of the central gap between the left and right-hand parts of the front row and the central gap between the left and right-hand parts of the front plinth, allow the beam of images of the motion picture projected by the image projecting means uninterrupted onto the screen.

The invention will be more clearly understood from the following description of a preferred embodiment thereof, which is given by way of example only, with reference to the accompanying drawings, in which:

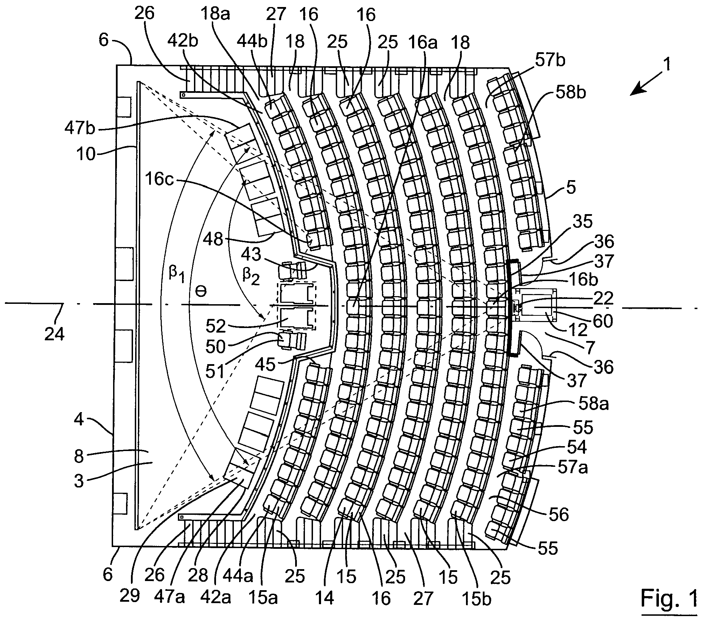

Fig. 1 is a top plan view of a cinema structure according to the invention,
Fig. 2 is a side elevational view of the cinema structure of Fig. 1 on the line II-II of Fig. 1,

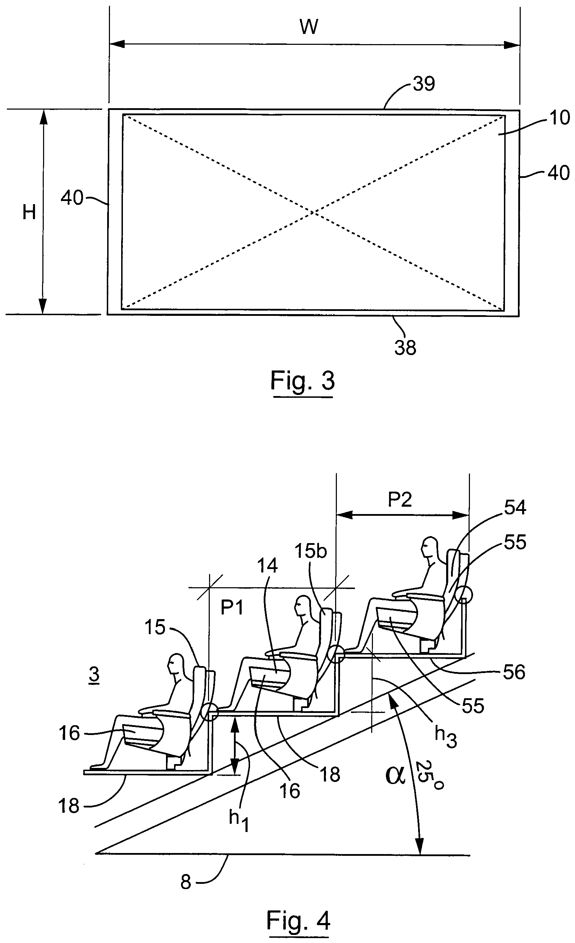

Fig. 3 is a front end elevational view of a screen of the cinema structure of Fig. 1, and
Fig. 4 is an enlarged side elevational view of a detail of the cinema structure of Fig. 1.

Referring to the drawings, there is illustrated a cinema structure according to the invention, indicated generally by the reference numeral 1, within which a motion picture is projected for viewing. The cinema 1 comprises an auditorium 3 defined between a front end wall 4 and a spaced apart rear end wall 5 and spaced apart parallel side walls 6 extending between the front and rear end walls 4 and 5. The front and rear end walls 4 and 5 and the side walls 6 extend upwardly from a floor 8 of the auditorium 3 to a ceiling 9 of the auditorium 3.

A vertically disposed flat planar screen 10 is located within the auditorium 3 adjacent to and mounted on the front end wall 4, and an image projecting means, namely, a projector 12 described briefly below projects images of the motion picture onto the screen 10. The projector 12 is located in a projection room 7 which extends from the rear end wall 5 into the auditorium 3. Front and side walls 35 and 36, respectively, partition the projection room 7 from the auditorium 3. The side walls 36 of the projection room 7 extend from the rear end wall 5 to the front wall 35 of the projection room 7. Doors 37 in the side walls 36 provide access to the projection room 7 from the auditorium 3.

The screen 10 defines spaced apart lower and upper edges 38 and 39, respectively, and spaced apart opposite side edges 40, and extends from the lower edge 38 to the upper edge 39 and from one side edge 40 to the other side edge 40. Additionally, the height H of the screen 10 is such that the screen 10 extends substantially the height of the front end wall 4 from the floor 8 to the ceiling 9 of the auditorium 3. The width W of the screen 10 between the side edges 40 is such that the screen 10 extends substantially the width of the front end wall 4 between the side walls 6 of the auditorium 3. In this embodiment of the invention the width W of the screen 10 is approximately 16 metres, and the height H of the screen 10 is approximately 8 metres, and thus has an aspect ratio of width W to height H of 1.95:1. However, it is envisaged that the width of the screen may be in the range of 10 metres to 24 metres, but preferably, would be in the range of 13 metres to 17 metres, and the height H of the screen may be in the range of 5 metres to 12 metres, but preferably, would be in the range of 6 metres to 9 metres. However, the dimensions of the screen 10 will largely be depending on the dimensions of the front end wall 4, since in general it is desirable that the area of the screen 10 should be substantially similar to the area of the front end wall 4.

Tiered seating 14 is provided in the auditorium 3, and the tiering angle α of the seating 14 in this embodiment of the invention is approximately 25° with reference to the floor 8 of the auditorium 3. The seating 14 is arranged in rows 15 of seats 16 from a front row 15a to a back row 15b. Each row 15 of seats 16 with the exception of the front row 15a comprises twenty-five seats 16. Each row 15 of seats 16 is supported on a corresponding plinth 18. The rows 15 of seats 16 extend in a general direction from one side wall 6 to the other side wall 6 of the auditorium 3, and transversely of the direction of tiering. The rows 15 of seats 16 are configured to form an arc when viewed in plan. Each arcuate row 15 is concave when viewed from the screen 10.

The centre seat 16a of the second row 15c, which is the row 15 immediately behind the front row 15a, is spaced apart a perpendicular distance from the screen 10 of approximately 7.3 metres. The centre seat 16b of the back row 15b is spaced apart a perpendicular distance from the screen 10 of approximately 14 metres. The rows 15 of seats 16 are spaced apart from each other with a horizontal pitch P1 of approximately 1,300mm. The vertical height h₁ of each plinth 18 above the adjacent forward plinth 18 is approximately 600mm, thus producing the tiering angle α of approximately 25°. The plinth 18 on which the front row 15a of seats 16 is supported is at a vertical height h₂ of approximately 1,200mm above the floor 8 of the auditorium 3, and in turn is at a vertical height also of approximately 1,200mm above the lower edge 38 of the screen 10.

The front plinth 18a on which the front row 15a of seats 16 is supported is formed in two parts, namely, a left-hand part 42a and a right-hand part 42b. A central portion of the front plinth 18a is omitted between the left and right-hand parts 42a and 42b, so that the left and right-hand parts 42a and 42b of the front plinth 18a define a central gap 43 therebetween. The front row 15a of seats 16 is similarly formed in two parts, namely, a left-hand part 44a and a right-hand part 44b. The left-hand part 44a of the front row 15a of seats 16 is supported on the left-hand part 42a of the front plinth 18a, while the right-hand part 44b of the front row 15a of seats 16 is supported on the right-hand part 42b of the front plinth 18a. Thus, the left and right-hand parts 44a and 44b of the front row 15a define a central gap 45 above the central gap 43 defined by the left and right-hand parts 42a and 42b of the front plinth 18a. The central gaps 43 and 45 in the front plinth 18a and the front row 15a uninterruptedly accommodate a lower central portion of the projected beam of images of the motion picture from the projector 12 to the screen 10.

The left and right-hand parts 44a and 44b of the front row 15a and the left and right-hand parts 42a and 42b of the front plinth 18a are equi-spaced on opposite sides of a vertical plane 24 which bisects the screen 10 between the side edges 40 thereof and extends perpendicularly from the screen 10. The left and right-hand parts 44a and 44b each contain nine seats. The lengths of the central gaps 43 and 45 defined between the left and right-hand parts 42a and 42b and 44a and 44b of the front plinth 18a and the front row 15a, respectively, are substantially similar to each other, and are substantially similar to the space which would be occupied by seven seats arranged side by side relative to each other.

Side aisles 27 located on each side of the auditorium 3 between the ends of the rows 15 of seats 16 and the adjacent one of the side walls 6 provide access to the rows 15 of seats 16. Steps 25 are provided in the side aisles 27 between adjacent plinths 18, and due to the tiering angle of the rows 15 of seats 16, and the vertical height h₁ between adjacent plinths 18, three steps 25 of similar height are provided from one plinth 18 to the next adjacent plinth 18 in each side aisle 27. Seven steps 26 are provided in each side aisle 27 between the floor 8 of the auditorium 3 and the front plinth 18a.

A first lower row 28 of seats 29 is provided on the floor 8 of the auditorium 3 in two parts, namely, a left-hand part 47a and a right-hand part 47b. The first lower row 28 of seats 29 is located in front of and adjacent the front plinth 18a, and is arcuate when viewed in plan and concave when viewed from the screen 10. The left and right-hand parts 47a and 47b of the first lower row 28 of seats 29 each comprise six seats, and define a central gap 48 which is of greater length than the length of the central gaps 43 and 45 to uninterruptedly accommodate the lower central portion of the projected beam of images of the motion picture from the projector 12 to the screen 10. The left and right-hand parts 47a and 47b of the first lower row 28 are equi-spaced on opposite sides of the vertical bisecting plane 24, which extends perpendicularly from the screen 10.

A second lower row 50 of two seats 51 and two adjacent wheelchair spaces 52 are centrally located on the floor 8 of the auditorium 3 in the central gap 43 defined between the left-hand and right-hand parts 42a and 42b of the front plinth 18a. The location of the second lower row 50 of the seats 51 and wheelchair spaces 52 on the floor 8 and in the central gap 43 is such that neither the seats 51 nor wheelchairs in the wheelchair spaces 52 nor patrons occupying the two seats 51 and wheelchair spaces 52 interrupt the projected beam of images of the motion picture from the projector 12 to the screen 10.

A first upper row 54 of seats 55 is located behind the back row 15b of seats 16 on a rear plinth 56. The seats 55 of the first upper row 58 are similar to the seats 16 of the rows 15. The first upper row 54 of seats 55 is arcuate when viewed in plan, and is concave when viewed from the screen 10. The rear plinth 56 is formed in two parts, namely, a left-hand part 57a and a right-hand part 57b, which extend respectively from the projection room 7 on opposite sides thereof to the corresponding side wall 6 of the auditorium 3. Similarly, the first upper row 54 of seats 55 is formed in two parts, namely, a left-hand part 58a and a right-hand part 58b, and the seats 55 of the left and right-hand parts 58a and 58b are supported on the left-hand and right-hand parts 57a and 57b, respectively, of the rear plinth 56. The left and right-hand parts of the first upper row 54 each comprise ten seats 55.

The vertical height h₃ of the rear plinth 56 above the plinth 18 on which the back row 15b of seats 16 is supported is approximately 600mm. The horizontal pitch P2 between the back row 15b of seats 16 and the first upper row 54 of seats 55 is approximately 1,300mm. The first four seats 55 adjacent each outer end of the first upper row 54 are spaced back from seats 16 of the back row 15b a distance greater than the spacing between the remaining seats 55 of the first upper row 54 and the seats 16 of the back row 15b in order to provide more legroom and additional comfort for patrons.

The configuration of the rows 15 of seats 16 is such that a patron sitting in the central seat 16b of the back row 15b of seats 16 has a horizontal viewing angle β₁ of approximately 65° of the screen 10 from one side edge 40 of the screen 10 to the other side edge 40 thereof. The patron sitting in the central seat 16b of the back row 15a has a vertical viewing angle Δ₁ of approximately 35° of the screen 10 from the lower edge 38 to the upper edge 39 of the screen 10. A patron sitting in one of the two innermost seats 16c in the front row 15a has a horizontal viewing angle β₂ of the screen 10 of approximately 100° between the side edges 40 of the screen 10. The patron sitting in one of the two innermost seats 16c of the front row 15a is provided with a vertical viewing angle Δ₂ of approximately 60°.

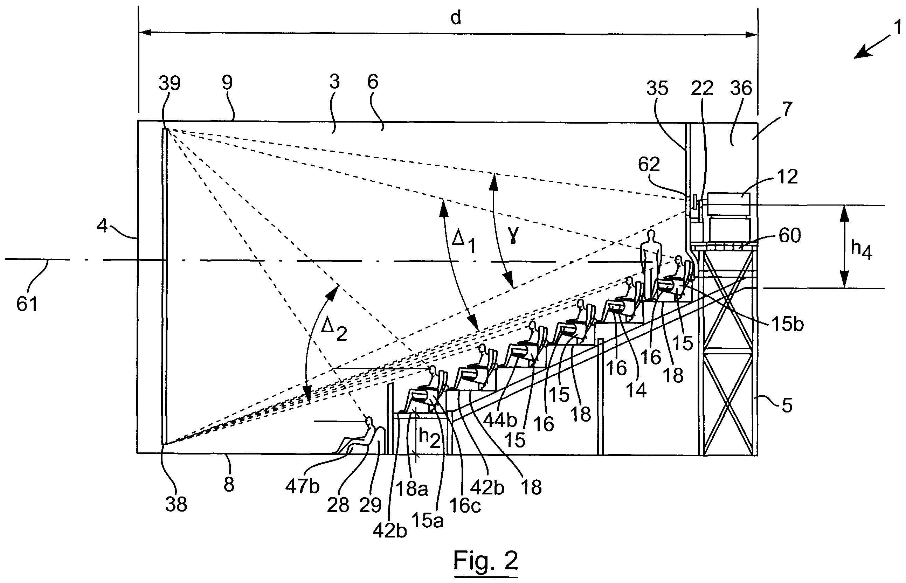

Turning now to the projector 12, an opening 62 in the front wall 35 of the projection room 7 accommodates the beam of images of the motion picture from the projector 12 to the screen 10. The projector 12 is a DCI compliant digital projector, and comprises a projection lens 22, which in this embodiment of the invention is a Fresnel lens with a focal length in the range of 0.7 to 1.3. The projector 12 is located in the projection room 7 and supported on a support 60 so that a central axis of the projection lens 22 is contained in the vertical plane 24 which bisects the screen 10 between the side edges 40 thereof and extends perpendicularly from the screen 10. The projector 12 is supported on the support 60 within the projection room 7 at a level such that the central axis of the projection lens 22 of the projector 12 is at a height h₄ above a horizontal plane 61 which bisects the screen 10 between the lower edge 38 and the upper edge 39 thereof and extends perpendicularly from the screen 10. The height h₄ in this embodiment of the invention is approximately one quarter of the height H of the screen 10, see Fig. 2. The projector 12 is mounted on the support 60 so that the projection lens 22 of the projector 12 is located at a perpendicular distance d from the screen 20 of between 13 metres and 14 metres. This, thus, provides a horizontal projection angle θ of approximately 60° from the projection lens 22 of the projector 12 to the respective opposite side edges 40 of the screen 10, and a vertical projection angle γ of approximately 35° from the projection lens 22 of the projector 12 to the lower and upper edges 38 and 39 of the screen 10.

In use, images of the motion picture are projected by the projector 12 onto the screen 10 so that the images of the motion picture fill the entire screen 10 across its full width W from one side edge 40 to the other side edge 40, and the full height H of the screen 10 from the lower edge 38 to the upper edge 39. Since the screen 10 extends substantially the full width of the front wall 4 of the auditorium 3 between the side walls 6, and since the screen 10 extends substantially the full height of the front wall 4 from the floor 8 to the ceiling 9 of the auditorium, and since the tiering angle of the seating 14 is approximately 25°, a patron sitting in any of the seats 16, 28, 51, 55 or in the wheelchair spaces 52 is provided with a particularly intimate experience, whereby such a patron is provided with the impression of virtually becoming a part of the action of the motion picture to the extent that such a patron is provided with the experience of participating in the action of the motion picture.

Additionally, the relatively steep tiering of the angle α of the rows 15 of seats 16 and the first upper row 54 of seats 55 provides every patron in the auditorium, including those in the first and second lower rows 28 and 50 with a full and uninterrupted view of the screen 10. This uninterrupted view of each patron in the auditorium 3 of the screen 10 is further enhanced by the horizontal pitching P1 of the rows 15 of the seats 16 and the first upper row 54 of seats 55 which also provide legroom and comfort to persons sitting therein, and in particular by the height h₁ and h₃ of the plinths 18 and 56 above the adjacent plinths 18.

The provision of the central gap 43 between the left and right-hand parts 42a and 42b of the front plinth 18a and the central gap 45 between the left and right-hand parts 44a and 44b of the front row 15a of seats 16 ensures that the beam of the images of the motion picture projected by the projector 12 onto the screen 10 is uninterrupted.

While the cinema structure has been described as comprising a first lower row 28 of seats 29 and a second lower row 50 of seats 51 and wheelchair spaces 52, while this is desirable, it is not essential. It is also envisaged that the first upper row 54 of seats 55 may be omitted, and in which case, the back row 15b of seats 16 would be the last row of seats in the auditorium.

While the vertical height between adjacent plinths has been described as being 600mm, it is envisaged that the vertical height between adjacent plinths may be in the range of 400mm to 800mm. It is also envisaged that the horizontal pitch between the plinths 18 and between the rear plinth 56 and the plinth 18 supporting the back row 15b of seats 16 may be greater or less than 1,300 metres, and may in fact lie in the range of 1,000mm to 1,500mm. It is also envisaged that the tiering angle α of the seating may be of any angular value between 20° and 40°.

While the screen has been described as comprising an aspect ratio of 1.95:1, it is envisaged that the aspect ratio of the screen may be in the range of 1.85:1 to 2.35:1.

While the screen has been described as being of width 16 metres, it is envisaged that the screen may be of width in the range of 10 metres to 24 metres, but would preferably be of width in the range of 13 metres to 17 metres. Additionally, while the screen has been described as being of height of 8 metres, it is envisaged that the height of the screen may be of any suitable height in the range of 5 metres to 12 metres, but would preferably be of height in the range of 6 metres to 9 metres. However, in general, the height and width of the screen will be dictated by the area of the front end wall, since it is desirable that the screen should be of substantially similar width and height to the width and height, respectively, of the front end wall.

While the rows 15 have been described as each comprising twenty-five seats with the exception of the front row 15a, it will be appreciated that the number of seats in each row will largely be dictated by the width of the auditorium between the side walls 6. Additionally, while the left and right-hand parts of the front row 15a have been described as each comprising nine seats, it will be appreciated that the number of seats in each left and right-hand part of the front row will also be determined largely by the width of the auditorium between the side walls 6. Needless to say, it is envisaged that the central gaps 43 and 45 between the left and right-hand parts of the front plinth 18a and the front row 15a may be of any desired length, other than a length corresponding to the space occupied by seven seats arranged side by side relative to each other. Indeed, the length of the central gaps 43 and 45 will largely be selected to ensure that the beam of images of the motion picture which is projected from the projector onto the screen is projected without interruptions which could otherwise be caused by obstacles, such as seats or heads of patrons sitting on such seats which would otherwise be included in the front row.

The spacing of the central seat of the row of seats immediately behind the front row of seats from the screen 10, and the spacing of the centre seat in the back row of seats from the screen 10 may be other than those described, and will largely be dictated by the size of the auditorium between the front end wall and the rear end wall.

While the projector has been described as being a video projector, any suitable projector may be used, and where the projector is a video projector, it is envisaged that the projector may be a digital video projector.

It will also be appreciated that the height of the central axis of the projection lens above the horizontal bisecting plane 61 may be any suitable height, and typically, will be a height within the range of one-eighth of the height of the screen to one-third of the height of the screen.

## Claims

1. A cinema structure comprising a front end wall (4), a rear end wall (5) spaced apart from the front end wall (4) and a pair of spaced apart side walls (6) extending between the front and rear end walls (4,5) and defining with the front and rear end wall (4,5) an auditorium (3), a screen (10) being located adjacent the front end wall (4), the screen (10) extending from a lower edge (38) to a spaced apart upper edge (39) and from one of a pair of spaced apart side edges (40) to the other side edge (40), an image projecting means (12) located spaced apart from the screen (10) adapted for projecting a motion picture onto the screen (10), and tiered seating (14) located in the auditorium (3), the tiered seating (14) defining a tiering angle of the seating in the range of 20° to 40° rising in a general direction from the front end wall (4) to the rear end wall (5) and comprising a plurality of seats (16) configured in rows, the rows (15) of the seats (16) being supported on respective plinths (18), the rows (15) of the seats (16) extending in a general direction from one side wall (6) to the other side wall (6) with the only aisles being present in the form of side aisles (27) located on each side of the auditorium (3) between respective ends of the rows (15) of the seats (16) and the adjacent side wall (6) to provide access to the rows (15) of seats (16), **characterised in that** the plinth (18) on which the front row (15) of seats (16) is supported comprises a left-hand part (42a) and a right-hand part (42b) spaced apart from each other and defining a central gap (43) therebetween, the front row (15) of seats (16) comprises a left-hand part (44a) and a right-hand part (44b) spaced apart from each other and defining a central gap (45) therebetween which is free of seats, the seats (16) of the left-hand part (44a) of the front row (15) are supported on the left-hand part (42a) of the plinth (18), and the seats (16) of the right-hand part (44b) of the front row (15) are supported on the right-hand part (42b) of the plinth (18).

2. A cinema structure as claimed in Claim 1 **characterised in that** the length of the central gap (43) defined by the left and right-hand parts (42) of the front plinth (18) is substantially similar to the length of the central gap (45) defined by the left and right-hand parts (44) of the front row (15) of seats (16).

3. A cinema structure as claimed in Claim 1 or 2 **characterised in that** the left and right-hand parts (42) of the plinth (18) are equi-spaced on opposite sides of a vertical plane (24) bisecting the screen (10) between the respective side edges (40) thereof and extending perpendicularly from the screen (10).

4. A cinema structure as claimed in any preceding claim **characterised in that** the central gap (45) defined between the left-hand and right-hand parts (44) of the front row (15) of seat (16) is of length corresponding to the space which would be occupied by a number of the seats (16) arranged side by side, the said number of seats (16) lying in the range of three seats to nine seats.

5. A cinema structure as claimed in Claim 4 **characterised in that** the said number of seats (16) is approximately seven seats.

6. A cinema structure as claimed in any preceding claim **characterised in that** the number of seats (16) in the left-hand part (44) of the front row (15) of seats (16) is similar to the number of seats (16) in the right-hand part (44) thereof, the number of seats (16) in each of the left and right-hand parts (44) of the front row (15) lying in the range of five seats to twenty seats.

7. A cinema structure as claimed in any preceding claim **characterised in that** the number of seats (16) in each of the left and right-hand parts (44) of the front row (15) is nine seats.

8. A cinema structure as claimed in any preceding claim **characterised in that** the vertical rise between adjacent plinths lies in the range of 400mm to 800mm.

9. A cinema structure as claimed in any preceding claim **characterised in that** the tiering angle of the seating (14) lies in the range of 22° to 30°.

10. A cinema structure as claimed in any preceding claim **characterised in that** the rows (15) of seats (16) extend substantially transversely of the tiering.

11. A cinema structure as claimed in any preceding claim **characterised in that** the rows (15) of the seats (16) are spaced apart at a horizontal pitch in the range of 1,000mm to 1,500mm.

12. A cinema structure as claimed in any preceding claim **characterised in that** the rows (15) of the seats (16) are arcuately configured when viewed in plan and are concave when viewed from the screen (10).

13. A cinema structure as claimed in any preceding claim **characterised in that** a centre one of the seats (16) in a row (15) of the seats immediately behind a front row (15) of the seats (16) is spaced apart a perpendicular distance from the screen (10) in the range of 4 metres to 8.5 metres.

14. A cinema structure as claimed in any preceding claim **characterised in that** a centre one of the seats (16) in a back row (15) of the seats is spaced apart from the screen (10) a perpendicular distance in the range of 12 metres to 30 metres.

15. A method for facilitating projecting and viewing a motion picture, the method comprising providing a cinema structure (1) comprising a front end wall (4), a rear end wall (5) spaced apart from the front end wall (4) and a pair of spaced apart side walls (6) extending between the front and rear end walls (4,5) and defining with the front and rear end walls (4,5) an auditorium (3), locating a screen (10) adjacent the front end wall (4), the screen (10) extending from a lower edge (38) to a spaced apart upper edge (39) and from one of a pair of spaced apart side edges (40) to the other side edge (40), locating an image projecting means (12) spaced apart from the screen (10) adapted to project a motion picture onto the screen (10), providing tiered seating (14) in the auditorium (3) at a tiering angle in the range of 20° to 40° rising in a general direction from the front wall (4) to the rear wall (5) and comprising a plurality of seats (16), projecting images of the motion picture from the image projecting means (12) onto the screen (10), configuring the seats (16) in rows (15), and supporting the rows (15) of seats (16) on respective plinths (18), whereby the rows (15) of seats (16) are configured to extend in a general direction from one side wall (6) to the other side wall (6) with the only aisles being present in the form of side aisles (27) located on each side of the auditorium (3) between respective ends of the rows (15) of the seats (16) and the corresponding adjacent side wall (6) to provide access to the rows (15) of seats (16), **characterised in that** the plinth (18) on which the front row (15) of seats (16) is supported is configured to comprise a left-hand part (42a) and a right-hand part (42b) spaced apart from each other, and defining a central gap (43) therebetween, the front row (15) of seats (16) is configured to comprise a left-hand part (44a) and a right-hand part (44b) spaced apart from each other and defining a central gap (45) therebetween which is free of seats, the seats (16) of the left-hand part (44a) of the front row (15) are supported on the left-hand part (42a) of the plinth (18), and the seats (16) of the right-hand part (44b) of the front row (15) are supported on the right-hand part (42b) of the plinth (18).

## Patentansprüche

1. Kinostruktur umfassend eine Stirnwand (4), eine von der Stirnwand (4) beabstandete Rückwand (5) und ein Paar beabstandeter Seitenwände (6), welche sich zwischen Stirnwand und Rückwand (4, 5) erstrecken und mit der Stirn- und Rückwand (4, 5) ein Auditorium (3) definieren, eine Leinwand (10), die benachbart zu der Stirnwand (4) angeordnet ist, wobei sich die Leinwand (10) von einem unterem Rand (38) zu einem hiervon beabstandeten oberen Rand (39) und von einem von einem Paar von beabstandeten Seitenrändern (40) zu dem anderen Seitenrand (40) erstreckt, ein Bildprojektionsmittel (12), das zur Leinwand (10) beabstandet angeordnet und dazu geeignet ist, einen Film auf die Leinwand (10) zu projizieren, und abgestufte Sitze (14), die in dem Auditorium (3) angeordnet sind, wobei die abgestuften Sitze (14) einen Abstufungswinkel der Sitze im Bereich von 20° bis 40°, ansteigend in einer allgemeinen Richtung von der Stirnwand (4) zu der Rückwand (5), definieren, und umfassend eine Mehrzahl von Sitzen (16), die in Reihen angeordnet sind, wobei die Reihen (15) von Sitzen (16) auf jeweiligen Sockeln (18) gelagert sind, die Reihen (15) von Sitzen (16) sich entlang einer allgemeinen Richtung von einer Seitenwand (6) zu der anderen Seitenwand (6) erstrecken, wobei die einzigen Gänge nur in der Form von Seitengängen vorhanden sind, die an jeder Seite des Auditoriums (3) zwischen jeweiligen Enden der Reihen (15) von Sitzen (16) und der benachbarten Seitenwand angeordnet sind, um Zugang zu den Reihen (15) von Sitzen (16) bereitzustellen, **dadurch gekennzeichnet, dass** der Sockel (18), auf welchem die vordere Reihe (15) von Sitzen (16) gelagert ist, einen linken Teil (42a) und einen rechten Teil (42b) umfasst, die voneinander beabstandet sind und einen zentralen Zwischenraum (43) zwischen einander definieren, die vordere Reihe (15) von Sitzen (16) einen linken Teil (44a) und einen rechten Teil (44b) umfasst, die voneinander beabstandet sind und einen zentralen Zwischenraum (45) zwischen einander definieren, in dem sich keine Sitze befinden, wobei die Sitze (16) des linken Teils (44a) der vorderen Reihe (15) an dem linken Teil (42a) des Sockels (18) gelagert sind und die Sitze (16) des rechten Teils (44b) der vorderen Reihe (15) an dem rechten Teil (42b) des Sockels (18) gelagert sind.

2. Kinostruktur nach Anspruch 1, **dadurch gekennzeichnet, dass** die Länge des zentralen Zwischenraums (43), welcher durch die linken und rechten Teile (42) des vorderen Sockels (18) definiert ist, im Wesentlichen ähnlich der Länge des zentralen Zwischenraums (45) ist, der durch die linken und rechten Teile der (44) der vorderen Reihe (15) von Sitzen (16) definiert ist.

3. Kinostruktur nach Anspruch 1 oder 2, **dadurch gekennzeichnet, dass** die linken und rechten Teile (42) des Sockels (18) in gleichen Abständen auf gegenüberliegenden Seiten einer vertikalen Ebene (24) angeordnet sind, welche die Leinwand (10) zwischen den entsprechenden Seitenrändern (40) halbiert und sich rechtwinklig von der Leinwand (10) erstreckt.

4. Kinostruktur nach einem der vorangegangenen Ansprüche, **dadurch gekennzeichnet, dass** der zentrale Zwischenraum (45), der zwischen den linken rechten Teilen (44) der vorderen Reihe (15) von Sitzen (16) definiert ist, eine Länge aufweist, die dem Platz entspricht, die eine Anzahl von nebeneinander angeordneten Sitzen (16) einnehmen würde, wobei die Anzahl der Sitze (16) im Bereich von drei bis neun Sitzen liegt.

5. Kinostruktur nach Anspruch 4, **dadurch gekennzeichnet, dass** die Anzahl der Sitze (16) in etwa sieben Sitze ist.

6. Kinostruktur nach einem der vorangegangenen Ansprüche, **dadurch gekennzeichnet, dass** die Anzahl der Sitze (16) im linken Teil (44) der vorderen Reihe (15) von Sitzen (16) ähnlich der Anzahl von Sitzen (16) im rechten Teil (44) davon ist, wobei die Anzahl der Sitze (16) in jedem der linken und rechten Teile (44) der vorderen Reihe (15) im Bereich von fünf Sitzen und zwanzig Sitzen liegt.

7. Kinostruktur nach einem der vorangegangenen Ansprüche, **dadurch gekennzeichnet, dass** die Anzahl der Sitze (16) in jedem der linken und rechten Teile (44) der vorderen Reihe (15) neun Sitze ist.

8. Kinostruktur nach einem der vorangegangenen Ansprüche, **dadurch gekennzeichnet, dass** der Höhenunterschied zwischen benachbarten Sockeln in dem Bereich von 400 mm bis 800 mm liegt

9. Kinostruktur nach einem der vorangegangenen Ansprüche, **dadurch gekennzeichnet, dass** der Abstufungswinkel der Sitze (14) in dem Bereich von 22° bis 30° liegt.

10. Kinostruktur nach einem der vorangegangenen Ansprüche, **dadurch gekennzeichnet, dass** die Reihen (15) von Sitzen (16) im Wesentlichen quer zur Abstufung verlaufen.

11. Kinostruktur nach einem der vorangegangenen Ansprüche, **dadurch gekennzeichnet, dass** die Reihen (15) von Sitzen (16) voneinander in einem horizontalen Abstand von 1.000 mm bis 1.500 mm beabstandet sind.

12. Kinostruktur nach einem der vorangegangenen Ansprüche, **dadurch gekennzeichnet, dass** die Reihen (15) von Sitzen (16) in der Draufsicht bogenförmig und von der Leinwand (10) aus gesehen konkav angeordnet sind.

13. Kinostruktur nach einem der vorangegangenen Ansprüche, **dadurch gekennzeichnet, dass** sich ein Sitz (16) im Zentrum einer Reihe (15) der Sitze, welche sich unmittelbar hinter einer vorderen Reihe (15) der Sitze (16) befindet, in dem Bereich von 4 Meter bis 8,5 Meter in senkrechtem Abstand von der Leinwand (10) beabstandet ist.

14. Kinostruktur nach einem der vorangegangenen Ansprüche, **dadurch gekennzeichnet, dass** sich ein Sitz (16) im Zentrum einer Rückreihe (15) der Sitze, in dem Bereich von 12 Meter bis 30 Meter in senkrechtem Abstand von der Leinwand (10) beabstandet ist.

15. Verfahren zur Erleichterung der Projektion und des Anschauens eines Filmes, wobei das Verfahren umfasst bereitstellen einer Kinostruktur (1), die umfasst eine Stirnwand (4), eine von der Stirnwand (4) beabstandete Rückwand (5) und ein Paar beabstandeter Seitenwände (6), welche sich zwischen Stirnwand und Rückwand (4, 5) erstrecken und mit der Stirn- und Rückwand (4, 5) ein Auditorium (3) definieren, anordnen einer Leinwand (10) benachbart zu der Stirnwand (4), wobei sich die Leinwand (10) von einem unterem Rand (38) zu einem hiervon beabstandeten oberen Rand (39) und von einem von einem Paar von beabstandeten Seitenrändern (40) zu dem anderen Seitenrand (40) erstreckt, anordnen eines Bildprojektionsmittels (12) beabstandet von der Leinwand (10), das dazu geeignet ist, einen Film auf die Leinwand (10) zu projizieren, bereitstellen abgestufter Sitze (14) in dem Auditorium (3) mit einem Abstufungswinkel im Bereich von 20° bis 40°, ansteigend in einer allgemeinen Richtung von der Stirnwand (4) zur Rückwand (5) und umfassend eine Mehrzahl von Sitzen (16), projizieren von Bildern des Films von dem Bildprojektionsmittel (12) auf die Leinwand (10), die Sitze (16) in Reihen (15), und Lagern der Reihen (15) von Sitzen (16) auf jeweiligen Sockeln (18), wobei die Reihen (15) von Sitzen (16) dazu eingerichtet sind, sich in einer allgemeinen Richtung von einer Seitenwand (6) zu der anderen Seitenwand (6) zu erstrecken, wobei die einzigen Gänge nur in der Form von Seitengängen vorhanden sind, die an jeder Seite des Auditoriums (3) zwischen jeweiligen Enden der Reihen (15) von Sitzen (16) und der entsprechenden benachbarten Seitenwand angeordnet sind, um Zugang zu den Reihen (15) von Sitzen (16) bereitzustellen, **dadurch gekennzeichnet, dass** der Sockel (18), auf dem die vordere Reihe (15) von Sitzen (16) gelagert ist, dazu eingerichtet ist, einen linken Teil (42a) und einen rechten Teil (42b) zu umfassen, die voneinander beabstandet sind und einen zentralen Zwischenraum (43) zwischen einander definieren, die vordere Reihe (15) von Sitzen (16) dazu eingerichtet ist, einen linken Teil (44a) und einen rechten Teil (44b) zu umfassen, die voneinander beabstandet sind und einen zentralen Zwischenraum (45) zwischen einander definieren, in dem sich keine Sitze befinden, wobei die Sitze (16) des linken Teils (44a) der vorderen Reihe (15) an dem linken Teil (42a) des Sockels (18) gelagert sind und die Sitze (16) des rechten Teils (44b) der vorderen Reihe (15) an dem rechten Teil (42b) des Sockels (18) gelagert sind.

## Revendications

1. Structure de cinéma comprenant une paroi d'extrémité avant (4), une paroi d'extrémité arrière (5) espacée de la paroi d'extrémité avant (4) et une paire de parois latérales (6) espacées s'étendant entre les parois d'extrémité avant et arrière (4, 5) et définissant un auditorium (3) avec les parois d'extrémité avant et arrière (4, 5), un écran (10) étant positionné de manière adjacente à la paroi d'extrémité avant (4), l'écran (10) s'étendant à partir d'un bord inférieur (38) jusqu'à un bord supérieur (39) espacé et à partir d'un bord d'une paire de bords latéraux (40) espacés jusqu'à l'autre bord latéral (40), un moyen de projection d'image (12) positionné à distance de l'écran (10), adapté pour projeter un film sur l'écran (10) et des fauteuils disposés en gradin (14) positionnés dans l'auditorium (3), les fauteuils disposés en gradin (14) définissant un angle de gradin des fauteuils avec une pente de l'ordre de 20° à 40° dans une direction générale allant de la paroi d'extrémité avant (4) jusqu'à la paroi d'extrémité arrière (5) et comprenant une pluralité de sièges (16) configurés en rangées, les rangées (15) des sièges (16) étant supportées sur des soubassements (18) respectifs, les rangées (15) de sièges (16) s'étendant dans une direction générale allant d'une paroi latérale (6) à l'autre paroi latérale (6) avec les seules allées qui sont présentes sous la forme d'allées latérales (27) positionnées de chaque côté de l'auditorium (3) entre les extrémités respectives des rangées (15) de sièges (16) et la paroi latérale (6) adjacente pour fournir l'accès aux rangées (16) de sièges (15), **caractérisée en ce que** :
le soubassement (18) sur lequel la rangée avant (15) de sièges (16) est supportée, comprend une partie gauche (42a) et une partie droite (42b) espacées l'une de l'autre et définissant un espace central (43) entre elles, la rangée avant (15) de sièges (16) comprend une partie gauche (44a) et une partie droite (44b) espacées l'une de l'autre et définissant un espace central (45) entre elles qui est dépourvu de sièges, les sièges (16) de la partie gauche (44a) de la rangée avant (15) sont supportés sur la partie gauche (42a) du soubassement (18) et les sièges (16) de la partie droite (44b) de la rangée droite (15) sont supportés sur la partie droite (42b) du soubassement (18).

2. Structure de cinéma selon la revendication 1, **caractérisée en ce que** la longueur de l'espace central (43) défini par les parties gauche et droite (42) du soubassement avant (18) est sensiblement similaire à la longueur de l'espace central (45) défini par les parties gauche et droite (44) de la rangée avant (15) de sièges (16).

3. Structure de cinéma selon la revendication 1 ou 2, **caractérisée en ce que** les parties gauche et droite (42) du soubassement (18) sont à équidistance sur les côtés opposés d'un plan vertical (24) coupant l'écran (10) entre ses bords latéraux (40) respectifs et s'étendant perpendiculairement par rapport à l'écran (10).

4. Structure de cinéma selon l'une quelconque des revendications précédentes, **caractérisée en ce que** l'espace central (45) défini entre les parties gauche et droite (44) de la rangée avant (15) de sièges (16) a une longueur correspondant à l'espace qui est occupée par un nombre de sièges (16) agencés côte à côte, ledit nombre de sièges (16) étant dans la plage de trois à neuf sièges.

5. Structure de cinéma selon la revendication 4, **caractérisée en ce que** ledit nombre de sièges (16) est d'approximativement sept sièges.

6. Structure de cinéma selon l'une quelconque des revendications précédentes, **caractérisées en ce que** le nombre de sièges (16) dans la partie gauche (44) de la rangée avant (15) de sièges (16) est similaire au nombre de sièges (16) dans sa partie droite, le nombre de sièges (16) dans chacune des parties gauche et droite (44) de la rangée avant (15) étant dans la plage de cinq sièges à vingt sièges.

7. Structure de cinéma selon l'une quelconque des revendications précédentes, **caractérisées en ce que** le nombre de sièges (16) dans chacune des parties gauche et droite (44) de la rangée avant (15) est de neuf sièges.

8. Structure de cinéma selon l'une quelconque des revendications précédentes, **caractérisées en ce que** la pente verticale entre les soubassements adjacents est dans la plage de 400 mm à 800 mm.

9. Structure de cinéma selon l'une quelconque des revendications précédentes, **caractérisées en ce que** l'angle de gradin des fauteuils (14) est dans la plage de 22° à 30°.

10. Structure de cinéma selon l'une quelconque des revendications précédentes, **caractérisées en ce que** les rangées (15) de sièges (16) s'étendent de manière sensiblement transversale par rapport aux gradins.

11. Structure de cinéma selon l'une quelconque des revendications précédentes, **caractérisées en ce que** les rangées (15) de sièges (16) sont espacées à un écartement horizontal dans la plage de 1 000 mm à 1 500 mm.

12. Structure de cinéma selon l'une quelconque des revendications précédentes, **caractérisées en ce que** les rangées (15) de sièges (16) sont configurées de manière arquée lorsqu'elles sont observées en plan et sont concaves lorsqu'elles sont observées depuis l'écran (10).

13. Structure de cinéma selon l'une quelconque des revendications précédentes, **caractérisées en ce qu'**un centre de l'un des sièges (16) dans une rangée (15) de sièges immédiatement derrière une rangée avant (15) de sièges (16) est espacé à une distance perpendiculaire de l'écran (10) dans la plage de 4 mètres à 8,5 mètres.

14. Structure de cinéma selon l'une quelconque des revendications précédentes, **caractérisées en ce qu'**un centre de l'un des sièges (16) dans une rangée arrière (15) de sièges est espacé de l'écran (10) par une distance perpendiculaire dans la plage de 12 à 30 mètres.

15. Procédé pour faciliter la projection et la visualisation d'un film, le procédé comprenant les étapes consistant à prévoir une structure de cinéma (1) comprenant une paroi d'extrémité avant (4), une paroi d'extrémité arrière (5) espacée de la paroi d'extrémité avant (4) et une paire de parois latérales (6) espacées s'étendant entre les parois d'extrémité avant et arrière (4, 5) et définissant un auditorium (3) avec les parois d'extrémité avant et arrière (4, 5), positionner un écran (10) adjacent à la paroi d'extrémité avant (4), l'écran (10) s'étendant à partir d'un bord inférieur (38) jusqu'à un bord supérieur (39) espacé et d'un bord d'une paire de bords latéraux (40) espacés jusqu'à l'autre bord latéral (40), positionner un moyen de projection d'image (12) espacé de l'écran (10), adapté pour projeter un film sur l'écran (10), prévoir des fauteuils en gradin (14) dans l'auditorium (3) à un angle de gradin avec une pente de l'ordre de 20° à 40° dans une direction générale allant de la paroi avant (4) à la paroi arrière (5) et comprenant une pluralité de sièges (16), projeter des images du film à partir du moyen de projection d'image (12) sur l'écran (10), les sièges (16) dans les rangées (15), et supporter les rangées (15) de sièges (16) sur des soubassements (18) respectifs, moyennant quoi les rangées (15) de sièges (16) sont configurées pour s'étendre dans une direction générale allant d'une paroi latérale (6) à l'autre paroi latérale (6) avec les seules allées qui sont présentes sous la forme d'allées latérales (27) positionnées de chaque côté de l'auditorium (3) entre des extrémités respectives des rangées (15) de sièges (16) et la paroi latérale (6) adjacente correspondante pour fournir l'accès aux rangées (16) de sièges (15), **caractérisé en ce que** le soubassement (18) sur lequel la rangée avant (15) de sièges (16) est supportée, est configurée pour comprendre une partie droite (42a) et une partie gauche (42b) espacées l'une de l'autre, et définissant un espace central (43) entre elles, la rangée avant (15) de sièges (16) est configurée pour comprendre une partie gauche (44a) et une partie droite (44b) espacées l'une de l'autre et définissant un espace central (45) entre elles qui est dépourvu de sièges, les sièges (16) de la partie gauche (44a) de la rangée avant (15) sont supportés sur la partie gauche (42a) du soubassement (18) et les sièges (16) de la partie droite (44b) de la rangée avant (15) sont supportés sur la partie droite (42b) du soubassement (18).
